# EUROPÄISCHE PATENTANMELDUNG

(11) **EP 1 059 130 A1**
(43) Veröffentlichungstag der Anmeldung: **13.12.2000**
(21) Anmeldenummer: 99111104.8
(22) Anmeldetag: 08.06.1999
(51) Int. Cl.: B21D 51/26, B23Q 41/02

(54) **Fertigungsanordnung zur Fertigung von Werkstücken, insbesondere von Verschlusskappen für Behälter**

(71) Anmelder: Kordyla, Hans, 30853 Langenhagen (DE)
(72) Erfinder: Kordyla, Hans, 30853 Langenhagen (DE)
(74) Vertreter: Leine, Sigurd, Dipl.-Ing.

(57) **Zusammenfassung**

Fertigungsanordnung zur Fertigung von Werkstücken, insbesondere von Verschlußkappen für Behälter, mit wenigstens zwei gleichen Reihen von jeweils in einer Reihe unterschiedlichen Fertigungsstationen, die jeweils über eine Transport- und/oder Führungseinrichtung in einer Reihe miteinander verbunden sind und die nacheinander Einzelschritte eines Fertigungsverfahrens zur Fertigung der Werkstücke ausführen. Jede Transport- und/oder Führungseinrichtung (10, 32; 22, 34; 12, 36; 34, 38) verbindet jeweils eine Fertigungsstation (z. B. 2) einer Reihe mit den nachfolgenden, den jeweils nachfolgenden Fertigungsschritt ausführenden Stationen (z. B. 4, 6) beider Reihen. Die Fertigungsstationen der parallelen Reihen sind somit gegenseitig vernetzt, so daß kurzzeitige Ausfälle einer Fertigungsstation aufgefangen werden können und so die Fertigungskapazität bei Ausfällen nicht wesentlich verringert ist.

## Beschreibung

Die Erfindung betrifft eine Fertigungsanordnung der im Oberbegriff des Anspruchs 1 genannten Art.

Bekannte Vorrichtungen der betreffenden Art zur Herstellung von Verschlußkappen für Behälter, z. B. Gläser für Lebensmittel, weisen mehrere Reihen von jeweils in einer Reihe unterschiedlichen Fertigungsstationen auf, die jeweils über eine Transporteinrichtung in einer Reihe miteinander verbunden sind und die nacheinander Einzelschritte eines Fertigungsverfahrens zur Fertigung der Verschlußkappen ausführen. In einer Reihe findet sich z. B. zunächst eine Stanzvorrichtung, die einen Deckelrohling aus Blech ausstanzt und tiefzieht. Nach Abschluß dieses Fertigungsschrittes transportiert die Transporteinrichtung den so geformten Rohling zu einer zweiten Fertigungsstation, in der vorgerollt wird. Danach gelangt der vorgerollte Rohling in eine nachfolgende Fertigungsstation, in der das Nachverformen erfolgt und dann in eine weitere Fertigungsstation, in der das Einbringen des Compounds erfolgt. Schließlich wird in einer letzten Arbeitsstation der Button hergestellt, eine Wölbung im zentralen Bereich des Dekkels.

Da Deckel in außerordentlich großen Mengen hergestellt werden müssen, sind bei der bekannten Fertigungsanordnung mehrere derartige Reihen von Fertigungsstationen vorgesehen, wodurch sich die Fertigungsmenge entsprechend vergrößert.

Da jede Fertigungsstation einem Verschleiß unterliegt und außerdem Ausfälle in jeder Fertigungsstation vorkommen können, führt ein Fehler oder ein Ausfall in einer Fertigungsstation einer Reihe zu einem Stillstand aller Fertigungsstationen in einer Reihe. Dadurch wird der Fertigungsvorgang dieser Reihe solange unterbrochen, bis der Fehler behoben oder eine Fertigungsstation dieser Reihe ausgetauscht ist. Dadurch ergeben sich Fertigungsverluste, die beträchtlich sein können.

Der Erfindung liegt die Aufgabe zugrunde, die Nachteile dieser bekannten Fertigungsanordnung zu verringern, also eine Fertigungsanordnung zu schaffen, bei der Fertigungsausfälle durch Fehler oder Ausfälle einer Fertigungsstation einer Reihe verringert sind.

Die der Erfindung zugrundeliegende Aufgabe wird durch die im Kennzeichen des Anspruchs 1 angegebene Lehre gelöst.

Der Grundgedanke der erfindungsgemäßen Lehre besteht darin, die Einzelstationen aller vorhandenen Reihen gegenseitig zu vernetzen, so daß Fertigungsstationen einer Reihe mit Fertigungsstationen einer anderen Reihe gekoppelt werden und so zusammenarbeiten können mit dem Ergebnis, daß die Fertigungsausfälle durch Fehler in Arbeitsstationen oder bei Austausch derselben verringert sind. Je größer die Zahl paralleler Reihen von Fertigungsstationen ist, um so mehr können sich die einzelnen Reihen einander ergänzen und Ausfälle in einer Reihe jedenfalls teilweise kompensieren.

Dieser Vorteil ergibt sich insbesondere bei einer vorteilhaften Weiterbildung der Erfindung, bei der in die Transportwege der zwischen einer Reihe aufeinanderfolgender Fertigungsstationen angeordneten Transport- und/oder Führungseinrichtungen ein für beide Transportwege gemeinsamer Speicher zur zeitweisen Speicherung von Werkstücken in dem jeweiligen Fertigungsstadium angeordnet sind. Diese Speicher machen die Anpassung der parallelen Reihen von Fertigungsstationen flexibler und puffern Ausfälle so ab, daß ein Ausfall einer Fertigungsstation in einer Reihe über die Zeit gesehen weitgehend ausgeglichen werden kann.

Der bzw. die Speicher können vorteilhafterweise ein Transportband aufweisen, auf dem die Werkstücke, z. B. Verschlußkappen, zeitweise verweilen können, ehe sie von nachfolgenden Fertigungsstationen aufgenommen werden können.

Eine zweckmäßige Weiterbildung der Grundlehre der Erfindung besteht darin, daß jede Transport- und/oder Führungseinrichtung für sich abschaltbar ist. Wird eine Transport- und/oder Führungseinrichtung abgeschaltet, so erhält zwar die dieser Transporteinrichtung nachfolgende Fertigungsstation keine weiteren Werkstücke von der der Transporteinrichtung vorhergehenden Fertigungsstation, von der in diesem Falle ein Ausfall angenommen ist, jedoch übernehmen dann benachbarte Fertigungsstationen dieses Fertigungsschrittes die Belieferung der nachfolgenden Fertigungsstationen, deren vorhergehende Transporteinrichtung abgeschaltet ist.

Anhand der Zeichnung soll die Erfindung an Ausführungsbeispielen näher erläutert werden.
- Fig. 1: zeigt in prinzipieller Darstellung ein Ausführungsbeispiel einer Fertigungsanordnung mit zwei parallelen Reihen von Fertigungsstationen,
- Fig. 2: zeigt in gleicher Darstellungsweise wie Fig. 1 ein zweites Ausführungsbeispiel der Erfindung und
- Fig. 3: zeigt in gleicher Darstellungsweise wie Fig. 1 ein drittes Ausführungsbeispiel der Erfindung.

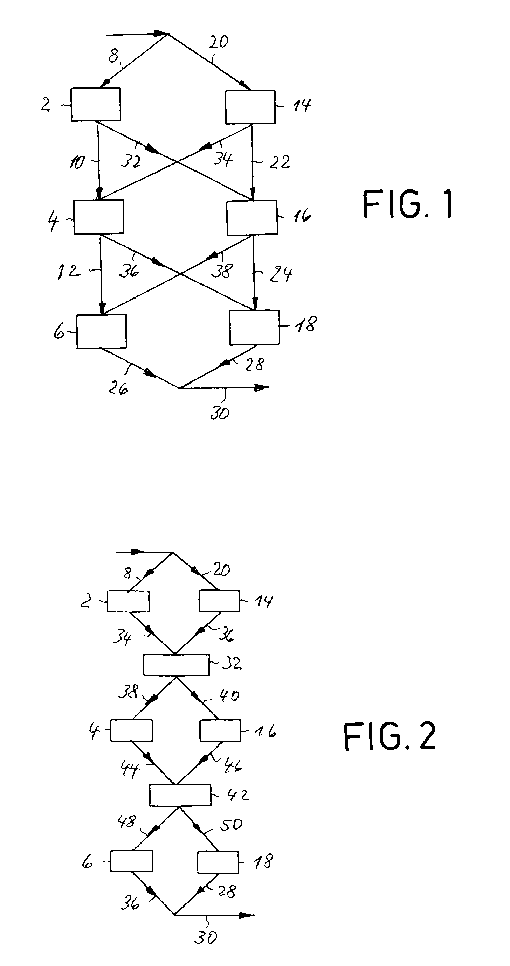

Fig. 1 zeigt eine Reihe von Fertigungsstationen 2, 4 und 6, die nacheinander verschiedene Fertigungsschritte an einem nicht dargestellten Werkstück ausführen. Die Zuführung der Werkstücke zu den Fertigungsstationen erfolgt jeweils mittels durch Pfeillinien dargestellte Transporteinrichtungen 8, 10 und 12.

Parallel zu der Reihe von Fertigungsstationen 2, 4 und 6 ist eine zweite Reihe von Fertigungsstationen 14, 16 und 18 angeordnet, die in gleicher Weise einzelne Fertigungsschritte an den Werkstücken ausführen, die jeweils durch Transporteinrichtungen 20, 22 und 24 zugeführt werden. Die Abführung der fertigen Werkstücke erfolgt durch Transporteinrichtungen 26, 28 und 30.

Die beiden Reihen von Fertigungsstationen 2, 4 und 6 einerseits und 14, 16 und 18 andererseits sind kreuzweise durch Transporteinrichtungen 32, 34, 36 und 38 verbunden. Diese kreuzweise Verbindung hat zur Folge, daß beispielsweise aus der Fertigungsstation 2 kommende teilgefertigte Werkstücke sowohl über die Transporteinrichtung 10 zu der den nächsten Fertigungsschritt ausführenden Fertigungsstation 4 gelangen kann, aber auch über die Transporteinrichtung 32 zu der ebenfalls den nachfolgenden Fertigungsschritt ausführenden Fertigungsstation 16.

Dies gilt umgekehrt entsprechend für die aus der Fertigungsstation 14 kommenden teilgefertigten Werkstücke, die sowohl über die Transporteinrichtung 22 zu der Fertigungsstation 16 als auch über die Transporteinrichtung 34 zu der Fertigungsstation 4 gelangen können. Entsprechendes gilt für die Transporteinrichtungen 12, 36, 24, 38, die zu den Fertigungsstationen 6 und 18 führen.

Fig. 1 zeigt in einer Reihe jeweils nur drei Fertigungsstationen, um das Prinzip der Erfindung bei diesem Ausführungsbeispiel zu erläutern. In der Praxis sind jedenfalls bei einer Fertigungsanordnung zur Fertigung von Verschlußkappen für Behälter in einer Reihe wesentlich mehr aufeinanderfolgende Fertigungsstationen vorgesehen, beispielsweise sechs zum aufeinanderfolgenden Stanzen und Tiefziehen, des Vorrollens, Einbringen des Compounds und der Buttonherstellung. Außerdem sind zur Vervielfachung der Fertigungskapazität in der Regel wesentlich mehr parallele Reihen von Fertigungsstationen vorgesehen. Je größer die Zahl der parallelen Reihen von Fertigungsstationen ist, um so mehr kann ein Ausfall einer Fertigungsstation in einer Fertigungsreihe aufgefangen und so insgesamt eine ins Gewicht fallende Verringerung der Fertigungskapazität vermieden werden.

Fig. 2 zeigt ein Ausführungsbeispiel ähnlich gemäß Fig. 1. Gleiche oder sich entsprechende Teile sind mit gleichen Bezugsziffern versehen. Der Unterschied besteht darin, daß zwischen den Arbeitsstationen 2 und 14 eines Fertigungsschrittes und den Arbeitsstationen 4 und 16 eines nachfolgenden Fertigungsschrittes ein Speicher 32 angeordnet ist, in den die teilgefertigten Verschlußkappen über Transporteinrichtungen 34 und 36 gelangen und dort für eine gewisse Zeit verweilen können, ehe sie durch Transporteinrichtungen 38 und 40 in die nachfolgenden Fertigungsstationen 4 und 16 gelangen.

In gleicher Weise ist zwischen den Fertigungsstationen 4 und 16 und den den letzten Fertigungsschritt ausführenden Fertigungsstationen 6 und 18 ein Speicher 42 angeordnet, in den die Verschlußkappen nach Ausführung des zweiten Fertigungsschrittes über Transporteinrichtungen 44 und 46 gelangen und dort für eine gewisse Zeit verweilen können, ehe sie durch Transporteinrichtungen 48 und 50 in die den letzten Fertigungsschritt ausführenden Fertigungsstationen 6 und 18 gelangen.

Der Vorteil der Fertigungsanordnung gemäß Fig. 2 besteht darin, daß die Speicher 32 und 42 eine gegenseitige Anpassung der beiden Reihen von Fertigungsstationen bewirken. Fällt z. B. Fertigungsstation 2 aus, weil ein Fehler vorliegt oder weil sie ausgetauscht werden muß, so wird trotzdem die in dieser Reihe nachfolgende Arbeitsstation 4 von dem Speicher 32 über die Transporteinrichtung 38 mit Verschlußkappen des entsprechenden Fertigungsschrittes gespeist, so daß diese Fertigungsstation 4 voll weiterarbeiten kann. Sind die Speicher 32 und 42 genügend groß, so können sie Ausfallzeiten einer Fertigungsstation voll und ganz auffangen, so daß insgesamt ein kontinuierlicher Betrieb aller anderen Fertigungsstationen außer der ausgefallenen möglich ist.

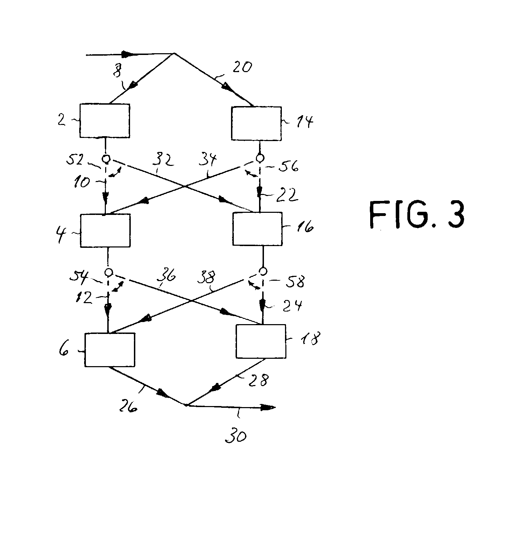

Das in Figur 3. dargestellte dritte Ausführungsbeispiel der Erfindung entspricht weitgehend dem gemäß Fig. 1. Gleiche oder sich entsprechende Teile sind mit gleichen Bezugsziffern versehen. Der Unterschied besteht darin, daß die Speisung der Transportwege 10, 32; 12, 36; 22, 34; und 24, 38 durch Umschalter 52, 54, 56 und 58 umschaltbar ist, die lediglich schematisch dargestellt sind. Ist z. B. die Fertigungseinheit 4 ausgefallen, so kann der Schalter 52 die Transporteinrichtung 10 abtrennen und die Speisung der Transporteinrichtung 32 herbeiführen, um so die Fertigungsstation 16 zu speisen.

## Patentansprüche

1. Fertigungsanordnung zur Fertigung von Werkstücken, insbesondere von Verschlußkappen für Behälter,
- mit wenigsten zwei gleichen Reihen von jeweils in einer Reihe unterschiedlichen Fertigungsstationen,
- die jeweils über eine Transport- und/oder Führungseinrichtung in einer Reihe miteinander verbunden sind und die nacheinander Einzelschritte eines Fertigungsverfahrens zur Fertigung der Werkstücke ausführen,
**dadurch gekennzeichnet,**
- daß jede Transport- und/oder Führungseinrichtung (10, 32; 22, 34; 12, 36; 24, 38) jeweils eine Fertigungsstation (z. B. 2) einer Reihe mit den nachfolgenden, den jeweils nachfolgenden Fertigungsschritt ausführenden Stationen (z. B. 4, 6) beider Reihen verbindet.

2. Fertigungsanordnung nach Anspruch 1, **dadurch gekennzeichnet**, daß in die Transportwege der zwischen einer Reihe aufeinanderfolgender Fertigungsstationen angeordneten Transport- und/oder Führungseinrichtungen (z. B. 34, 36; 38, 40) ein für beide Transportwege gemeinsamer Speicher (32, 42) zur zeitweisen Speicherung von Werkstücken in dem jeweiligen Fertigungsstadium angeordnet sind.

3. Fertigungsanordnung nach Anspruch 2, **dadurch gekennzeichnet**, daß der Speicher (32, 34) ein Transportband aufweist.

4. Fertigungsanordnung nach Anspruch 1, **dadurch gekennzeichnet**, daß jede Transport- und/oder Führungseinrichtung für sich abschaltbar ist.
